# EUROPÄISCHE PATENTSCHRIFT

(11) **EP 2 942 236 B1**
(45) Veröffentlichungstag und Bekanntmachung des Hinweises auf die Patenterteilung: **11.04.2018**
(21) Anmeldenummer: 15000387.9
(22) Anmeldetag: 10.02.2015
(51) Int. Cl.: B60R 7/04

(54) **Nutzfahrzeugkabine mit einem mobilen Stauraum**
Commercial vehicle cab with a mobile storage unit
Cabine de véhicule utilitaire dotée d'un espace de rangement de mobile

(30) Priorität: 10.05.2014 DE 102014006867
(43) Veröffentlichungstag der Anmeldung: 11.11.2015
(73) Patentinhaber: MAN Truck & Bus AG, 80995 München (DE)
(72) Erfinder: Schmitz, Andreas, 85414 Helfenbrunn (DE)
(74) Vertreter: Liebl, Thomas

(56) Entgegenhaltungen:
- DE-A1- 4 433 422
- FR-A1- 2 935 727
- US-A- 3 089 597
- US-A- 5 072 983
- US-A- 5 294 026
- US-B1- 6 196 605

## Beschreibung

Die Erfindung betrifft eine Nutzfahrzeugkabine mit einem mobilen Stauraum nach dem Oberbegriff des Anspruchs 1. Eine solche Kabine wird in der US 5,294,026 A1 offenbart Fahrer von Nutzfahrzeugen, insbesondere von Lastkraftwagen, nehmen für längere Fahrten von zu Hause Wäsche zum Wechseln, Waschutensilien, etc. in einem Transportbehältnis, insbesondere einem Koffer mit in die Fahrzeugkabine. Üblicherweise wird dazu das Transportbehältnis, beispielsweise eine Tasche oder ein Hartschalenkoffer mit Ausziehgriff (Trolley), bei geöffneter Beifahrertür hochgestemmt und auf den Beifahrersitz abgelegt. Dort stört er dann beim Einsteigen und ist zudem nicht lagefixiert, so dass er beim Bremsen und in Kurvenfahrten verrutschen kann. Der Koffer wird daher vom Fahrer regelmäßig vom Sitz genommen und am Boden oder einer rückwärtigen Liege abgelegt, wo er aber für eine Nutzung nur schwer zugänglich ist. Insgesamt ist somit die Handhabung eines solchen Kofferns beim Beladen, beim Einsteigen und bei der Nutzung unbequem und aufwendig. Nach dem Ausräumen des Transportbehältnisses muss dieses zudem noch extra verstaut werden.
Weiter sind fest in einer Nutzfahrzeugkabine integrierte Stauräume als verschließbare Fächer, Schubladen, etc. bekannt, welche aber nicht als mobile Stauräume für eine externe Beladung zur Verfügung stehen.
Zudem sind allgemein Halteeinrichtungen an unterschiedlichen Bauteilen in Fahrzeugkabinen allgemein bekannt, an denen Gegenstände lösbar auf-/eingehängt oder verstaut werden können. Beispielsweise sind dies Kleiderhaken, Staunetze an der Rückseite von Sitzlehnen, an Innenverkleidungen etc..
Aufgabe der Erfindung ist, eine Nutzfahrzeugkabine mit einem mobilen Stauraum so weiterzubilden, dass ein lagefixierbarer zusätzlicher Stauraum in Verbindung mit einer Beladehilfe zur Verfügung gestellt wird.
Diese Aufgabe wird gelöst mit den Merkmalen der unabhängigen Ansprüche. Vorteilhafte Ausgestaltungen sind Gegenstand der Unteransprüche.
Erfindungsgemäß ist vorgesehen, dass der mobile Stauraum durch wenigstens ein Transportbehältnis gebildet ist, welches mit einer Befestigungseinrichtung, vorzugsweise mittels einer Ein- und/oder Aufhängevorrichtung, an einer Türinnenseite einer - vorzugsweise beifahrerseitigen - Kabinentür festlegbar ist, insbesondere lösbar festlegbar und/oder einhängbar ist. Das Transportbehältnis ist dabei so dimensioniert und die Befestigungseinrichtung so ausgebildet und angeordnet, dass das an der Kabinentür festgelegte Transportbehältnis bei geschlossener Kabinentür über einer Sitzfläche, insbesondere über einer Beifahrersitzfläche, in die Kabine eingeschwenkt ist.
Die Beladung der Kabine mit dem Transportbehältnis kann somit einfach und bequem durchgeführt werden, indem eine Person zum Beispiel bei geöffneter Beifahrertür das Transportbehältnis zum Beispiel mittels der Aufhängevorrichtung an der Türinnenseite einhängt. Anschließend kann die Person ohne Beeinträchtigung durch das Transportbehältnis in die Kabine einsteigen und die Tür zuziehen, wodurch das Transportbehältnis über der Beifahrersitzfläche einschwenkt und lagefixiert griffbereit ist.
Bevorzugt wird als Transportbehältnis ein Koffer verwendet, der als Hartschalenkoffer und/oder fahrbarer Koffer und/oder Koffer mit Ausziehgriff (Trolley) ausgebildet sein kann. Insbesondere soll die Kofferwand oder ein Koffergestell an dem der kofferseitige Teil der Aufhängevorrichtung angebracht ist, entsprechend stabil für die Haltefunktion ausgebildet sein. Alternativ kann das Transportbehältnis aber auch durch eine Tasche, insbesondere eine Reisetasche, gebildet sein.
Eine geeignete Transportbehältnisgröße für die erfindungsgemäße Beladung mit Hilfe der schwenkbaren Fahrzeugtür entspricht vorzugsweise in etwa den Abmaßen von Flugzeugfreigepäck (Handgepäck), insbesondere mit einer Höhe von bis zu 56 cm, einer Breite von bis zu 45 cm und einer Tiefe von bis zu 25 cm. Alternativ oder zusätzlich kann das Transportbehältnis für ein dem Flugzeugfreigepäck (Handgepäck) entsprechendes definiertes Gesamtgewicht ausgelegt sein, zum Beispiel von maximal 12 kg, insbesondere von 5 bis 12kg, ausgelegt sein. Erfindungsgemäß ist die Befestigungseinrichtung mehrteilig, insbesondere zweiteilig, lösbar als Auf- und/oder Einhängevorrichtung ausgebildet und weist diese ein Einhängeteil am Transportbehältnis und ein Tragteil an der Kabinentür auf. Das Einhängeteil am Transportbehältnis ist vorzugsweise etwa in der Mitte der Rückseite des Transportbehältnisses angebracht. Dadurch wird insbesondere die erforderliche Lage über der Sitzfläche, insbesondere Beifahrersitzfläche, bei eingeschwenkter Tür erreicht, ohne dass der Koffer weit in den Seitenfensterbereich nach oben ragt. Die Begrifflichkeit "Einhängen" ist hier zudem in einem weiten Sinne zu verstehen und soll ausdrücklich jedwede geeignete lösbare Befestigungsmöglichkeit umfassen, also ausdrücklich auch zum Beispiel Rast- und/oder Klipverbindungen, um nur ein Beispiel zu benennen.

In einer ersten konkreten Ausführungsform kann das Einhängeteil am Transportbehälter als Einhängeelement, zum Beispiel als Einhängehaken, gegebenenfalls einklappbar ausgebildet sein, wobei als zugeordnetes Tragteil an der Kabinentür die innere Türbrüstung zum Einhängen genutzt wird. Diese Ausführungsform ist einfach und sehr kostengünstig und erfordert keine zusätzlichen Anbauten an der Fahrzeugtür. Bevorzugt ist hierbei das Einhängeelement zum Beispiel an und/oder in das Transportbehältnis einklappbar und/oder dort versenkbar ausgebildet.

Bei einer alternativen zweiten konkreten Ausführungsform ist das Tragteil an der Kabinentür ein, vorzugsweise vertikal ausgerichtetes, Tragschienenteil, das an der Kabinentür in Höhe der Türbrüstung fest angebracht ist oder dort anbringbar ist. Zum Beispiel kann das Tragschienenteil mittels eines Einhängehakens an der inneren Türbrüstung einhängbar gestaltet sein. Als Einhängeteil am Transportbehältnis bzw. des Koffers ist ein zugeordnetes Schienenaufnahmeteil angebracht, mit dem das Transportbehältnis auf die Tragschiene bis zu einer Arretierung/Anschlag aufsteckbar ist. Die Tragschiene kann dabei insbesondere als T-Schiene oder Schwalbenschwanz-Schiene ausgebildet sein. Mit einer solchen Aufhängevorrichtung mit einer Schienenführung wird eine sehr stabile Anbindung des Transportbehältnisses an der Kabinentür erreicht, die dennoch einfach nach Schließen der Fahrzeugtür in der Kabine wieder trennbar ist.

Bei einer weiteren Ausführungsform weist das Transportbehältnis, vorzugsweise ein Koffer, einen, zum Beispiel U-förmigen, Ausziehgriff auf, wobei das Einhängeteil, zum Beispiel ein Einhängehaken, am Ausziehgriff (zum Beispiel am Griffteil des Ausziehgriffs) angebracht ist und das zugeordnete Tragteil an der Kabinentür, vorzugsweise am oberen Türrahmen der Kabinentür, zum Einhängen genutzt wird. Der Koffer wird dazu bevorzugt an der offenen Beifahrertür mit ausgefahrenem Ausziehgriff am oberen Türrrahmen eingehängt. Anschlie-ßend wird der Koffer nach oben so weit bis zu einer definierten Position angehoben und dabei der Ausziehgriff bis zu einer gegebenenfalls durch eine Raste bestimmten Position eingeschoben, dass der Koffer in der Höhe über der Beifahrersitzfläche positioniert ist. Anschließend kann eingestiegen und die Beifahrertür geschlossen werden.

In einer besonders bevorzugten Weiterbildung wird vorgeschlagen, wenigstens ein weiteres Tragteil, welches mit einem Einhängeteil am Transportbehältnis kompatibel ist, an geeigneter Stelle der Kabine anzuordnen. Insbesondere kann dies ein Tragschienenteil zum Aufschieben eines zugeordneten Schienenaufnahmeteils des Transportbehältnisses für eine stabile Halterung sein.

Eine besonders geeignete Stelle ist dabei die Rückseite einer nach vorne klappbaren Sitz-Rückenlehne, insbesondere einer Beifahrersitz-Rückenlehne. Das Transportbehältnis, insbesondere ein Koffer, kann dazu nach seiner Beladung hinein in die Kabine von der Beifahrertür abgenommen und am Tragteil an der Sitz-Rückenlehne befestigt werden. Wenn die Rückenlehne nach vorne geklappt wird, liegt dann der Koffer griffbereit für eine Nutzung in Reichweite. Wenn sich hinter der Rückenlehne eine Liege befindet, ist deren Nutzung durch einen Koffer an der Rückenlehne nur wenig eingeschränkt, insbesondere dann, wenn der Sitz insgesamt nach vorne verschoben wird, oder die Rückenlehne nach vorne geklappt ist.

Ein Tragteil kann auch an der Unterseite einer oberen Liege angebracht sein, so dass dann das Transportbehältnis unter der oberen Liege hängt. Gegebenenfalls und eventuell zusätzlich kann das Transportbehältnis hier auch mit einem behältnisseitigen Haken an der Frontkante der Liege eingehängt werden.

Zusätzlich oder alternativ kann ein Tragteil auch innen an einer Dachseitenwand oberhalb der Kabinentür angebracht sein, so dass dort ein Transportbehältnis, insbesondere ein Koffer quer oder hochkant als stabiler, lagefixierter Stauraum zur Verfügung gestellt werden kann.

Diese an unterschiedlichen Stellen in der Kabine angebrachten Tragteile bieten noch die Möglichkeit für eine andere/zusätzliche Nutzung, beispielsweise zum Einhängen einer Schuhaufbewahrung, einer Schmutzwäscheaufbewahrung, eines Mülleimers, eines Zeitschriftenhalters, etc.

Die Aufhängevorrichtung kann vorteilhaft mit einer betätigbaren Arretierung gesichert werden, wobei insbesondere ein Tragschienenteil bevorzugt eine federvorgespannte, betätigbare Druckknopf-Arretierung aufweisen kann.

Anhand einer Zeichnung wird die Erfindung weiter erläutert.

Es zeigen:
- Fig. 1: einen Lastkraftwagen mit geöffneter Beifahrertür, an der eine Person einen Koffer an einer Aufhängevorrichtung einhängt,
- Fig. 2: die Darstellung nach Fig. 1, bei der die Person einsteigt,
- Fig. 3: die Darstellung nach Fig. 1 ohne Person,
- Fig. 4: die Situation nach Fig. 3 bei geöffneter Beifahrertür mit einem Blick aus der Kabine,
- Fig. 5: die Darstellung nach Fig. 3, bei der die Person die Beifahrertür bereits teilweise zugezogen hat,
- Fig. 6: die Ansicht nach Fig. 4, jedoch bei bereits geschlossener Beifahrertür mit eingeschwenktem Koffer,
- Fig. 7: eine Seitenansicht des Koffers mit einer ersten Ausführungsform einer Aufhängevorrichtung,
- Fig. 8: eine Seitenansicht des Koffers mit einer zweiten Ausführungsform einer Aufhängevorrichtung,
- Fig. 9: eine Draufsicht von oben auf den Koffer mit den Aufhängevorrichtungen nach Fig. 7 und Fig. 8,
- Fig. 10: eine Seitenansicht des Koffers mit einer weiteren Ausführungsform einer Aufhängevorrichtung,
- Fig. 11: eine Seitenansicht eines Koffers mit Ausziehgriff und einer weiteren Ausführungsform einer Aufhängevorrichtung,
- Fig. 12: eine Seitenansicht auf einen Beifahrersitz von der Fahrerseite aus mit einem an einer beifahrerseitigen Rückenlehne angebrachten Koffer,
- Fig. 13: eine vergrößerte Darstellung des Bereichs A aus Fig. 12 mit abgenommenem Koffer und eine vergrößerte Detaildarstellung B einer Druckknopfarretierung,
- Fig. 14: die Ansicht nach Fig. 12 mit nach vorne geklappter Rückenlehne und geöffnetem Koffer,
- Fig. 15: die Ansicht nach Fig. 12 zur Verdeutlichung der Beinfreiheit auf einer hinteren Liege,
- Fig. 16: die Anbringung eines Koffers an der Unterseite einer oberen Liege, und
- Fig. 17: die Anbringung eines Koffers an einer inneren Dachseitenwand oberhalb der Kabinentür.

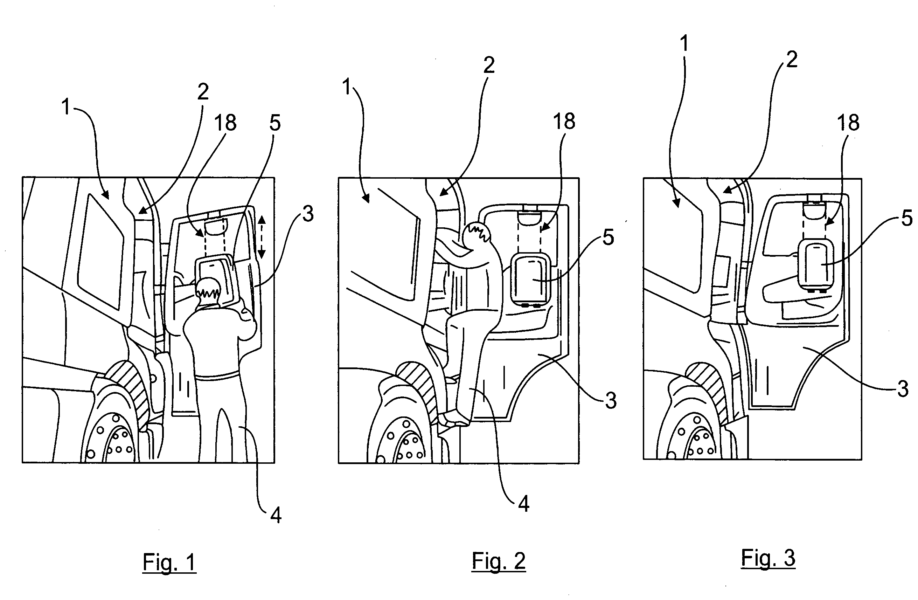

In Fig. 1 ist eine perspektivische Teilansicht eines Nutfahrzeugs als Lastkraftwagen 1 gezeigt mit einer Fahrerkabine 2 und einer geöffneten beifahrerseitigen Kabinentür 3.

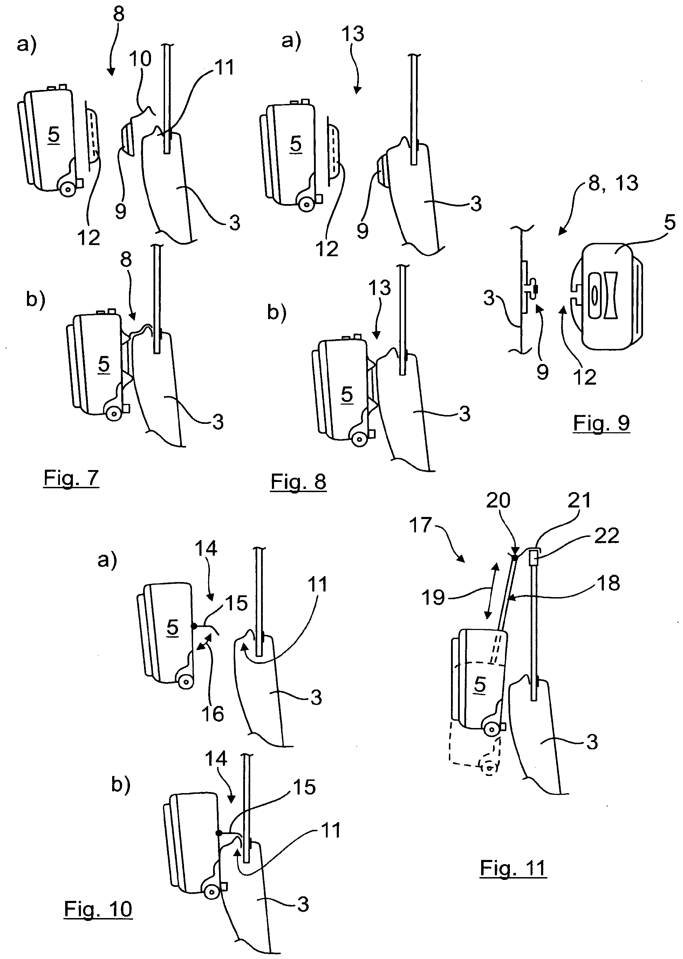

Vor der geöffneten Kabinentür 3 steht eine Person 4 als Fahrer, der einen Koffer 5 mittels einer Aufhängevorrichtung (siehe Fig. 7 bis 11) an der Türinnenseite so einhängt, dass die Kofferunterseite in einer Höhe über der Beifahrersitzfläche liegt. Der Koffer 5 stellt hier nur beispielhaft ein bevorzugtes Transportbehältnis dar; grundsätzlich könnte nachstehend in analoger Weise auch immer jedwedes andere geeignete Transportbehältnis anstelle des Koffers Verwendung finden.

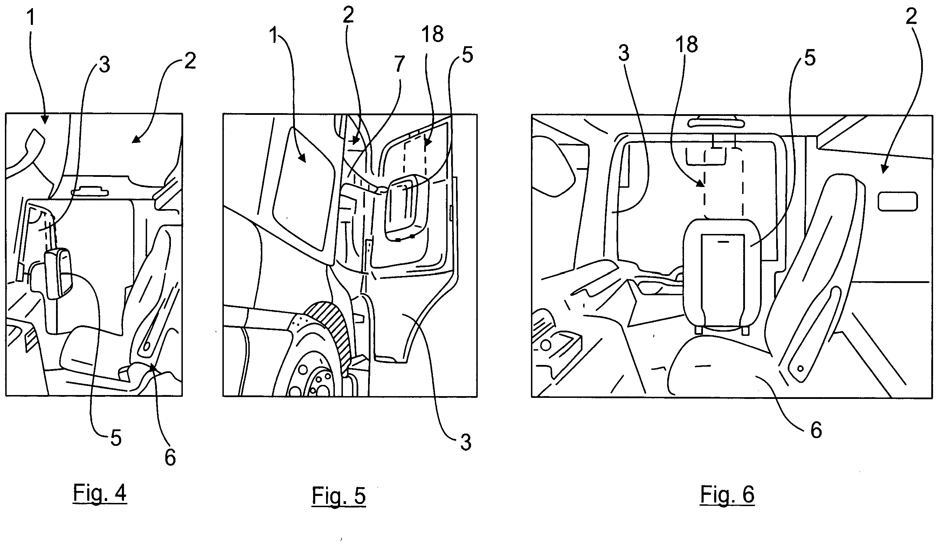

In Fig. 2 ist dargestellt, wie die Person 4 bequem und ohne Beeinträchtigung durch den eingehängten Koffer 5 einsteigt, wodurch sich dann die Situation nach Fig. 3 ergibt, die in Fig. 4 nochmals von der Kabineninnenseite her mit einem Blick über den Beifahrersitz 6 dargestellt ist.

In Fig. 5 ist dargestellt, wie die Person 4 (zu sehen ist deren Arm 7) die Kabinentür 3 zuzieht.

In Fig. 6 ist der Zustand bei geschlossener Kabinentür 3 von der Fahrerseite aus gesehen dargestellt. Der an der Kabinentür 3 eingehängte Koffer 5 ist ersichtlich zusammen mit der Kabinentür 3 über den Beifahrersitz 6 so eingeschwenkt, dass die Unterseite des Koffers 5 oberhalb der Beifahrersitzfläche zu liegen kommt.

In Fig. 7 ist eine erste Ausführungsform einer Aufhängevorrichtung 8 dargestellt, wobei in Fig. 7a deren Bauteile getrennt und in Fig. 7b zusammenmontiert dargestellt sind.

Die Aufhängevorrichtung 8 ist zweiteilig ausgebildet und besteht aus einem Tragschienenteil 9 in der Form eines T-Schienenteils mit einem oberen Einhängehaken 10 in der Gestalt der inneren Türbrüstung 11 der Kabinentür 3, wo das Tragschienenteil 9 in der montierten Stellung (Fig. 7b) eingehängt ist. Zudem ist an der Kofferrückseite des fahrbaren Koffers 5 (Trolley) ein dem Tragschienenteil 9 zugeordnetes Schienenaufnahmeteil 12 angebracht, mit dem der Koffer 5 auf das Tragschienenteil 9 aufgesteckt und an der Kabinentür 3 entsprechend Fig. 7b gehalten ist.

In Fig. 8 ist eine zweite Ausführungsform einer Aufhängevorrichtung 13 dargestellt, die weitgehend ähnlich der Ausführungsform nach Fig. 7 ist, mit dem Unterschied, dass das Tragschienenteil 9 hier (ohne Einhängehaken 10) fest an der Türinnenseite der Kabinentür 3 angebracht ist.

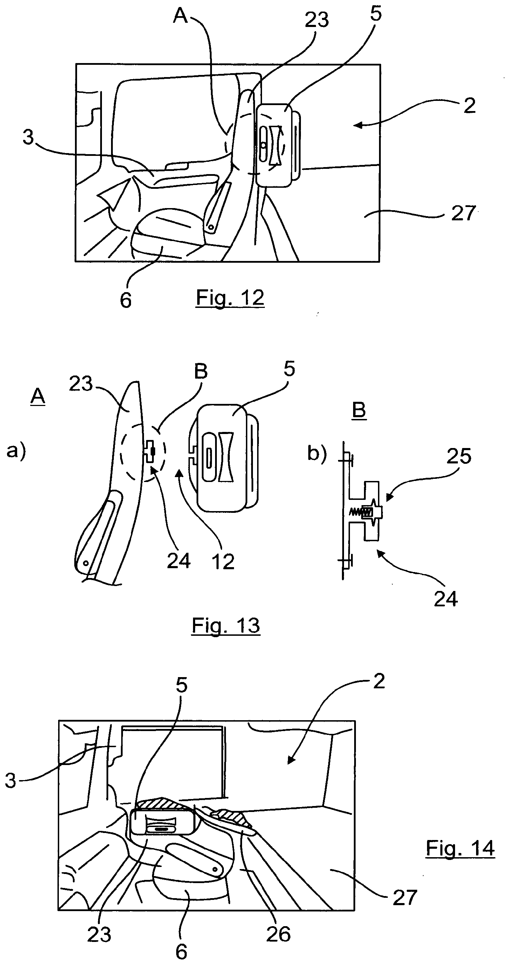

Fig. 9 ist eine Draufsicht von oben auf den Koffer 5 mit dem Schienenaufnahmeteil 12 und auf das zugeordnete T-förmige Tragschienenteil 9 entsprechend den Ausführungsformen nach Fig. 8 und 13.

In Fig. 10 ist eine dritte Ausführungsform einer Einhängevorrichtung 14 gezeigt, bei der an der Rückseite des Koffers 5 im mittleren Bereich ein Einhängehaken 15 angeordnet ist, welcher ausklappbar (Doppelpfeil 16) gestaltet ist. Mit dem Einhängehaken 15 kann der Koffer 5 unmittelbar an der Türbrüstung 11 eingehängt werden (Fig. 10b), so dass die Türbrüstung 11 hier unmittelbar als Tragteil an der Kabinentür 3 genutzt wird.

In Fig. 11 ist eine vierte Ausführungsform einer Einhängevorrichtung 17 dargestellt in Verbindung mit einem Koffer 5, der hier einen U-förmigen Ausziehgriff 18 aufweist (Ausziehfunktion dargestellt durch Doppelpfeil 19). Das Griffteil 20 als U-Basis ist hier mit einem Einhängehaken 21 ausgerüstet, mit dem der Koffer 5 bei (teilweise) ausgeschobenem Ausziehgriff 18 an oberen Türrahmen 22 der Kabinentür 3 eingehängt wird. In den Fig. 1 bis 6 ist die vierte Ausführungsform der Einhängevorrichtung 17 mit dem U-förmigen Ausziehgriff 18 jeweils strichliert eingezeichnet. Der Einhängevorgang des Koffers 5 an der Kabinentür 3 kann dabei so ablaufen, dass bei vollständig, ausgefahrenem Ausziehgriff 18 der Einhängehaken 21 am oberen Türrahmen 22 eingehängt wird (strichliert in Fig. 11 eingezeichnet). Anschließend wird der Koffer 5 angehoben und der Ausziehgriff 18 mit seinen Führungsstangen so weit eingeschoben, biss der Koffer 5 in der erforderlichen Höhe über der Beifahrersitzfläche positioniert ist. Anschließend kann die Kabinentür 3 geschlossen und der Koffer 5 über der Beifahrersitzfläche eingeschwenkt werden.

Wie in Fig. 12 dargestellt, kann der Koffer 5 von der Kabinentür 3 abgenommen und an der Rückseite im oberen Bereich einer klappbaren Rückenlehne 23 des Beifahrersitzes 6 fest angebracht werden. Dazu ist dort, wie in Fig. 13 dargestellt, ein horizontal verlaufendes, T-förmiges Tragschienenteil 24 (entsprechend dem Tragschienenteil 9 aus Fig. 9) angebracht, auf das der Koffer 5 mit seinem Schienenaufnahmeteil 12 aufsteckbar ist. Wie in Fig. 13b gezeigt, weist zudem das Tragschienenteil 24 eine federvorgespannte, betätigbare Druckknopf-Arretierung 25 auf, mit der der Koffer 5 in seiner Lage gesichert werden kann. Mit einer solchen Druckknopf-Arretierung 25 kann auch das Tragschienenteil 9 aus Fig. 9 ausgerüstet sein.

In Fig. 14 ist die Anordnung nach Fig. 12 bei nach vorne geklappter Rückenlehne 23 dargestellt. Ersichtlich liegt dabei der Koffer 5 so, dass seine Deckelklappe 26 bequem geöffnet und sein Inhalt genützt werden kann.

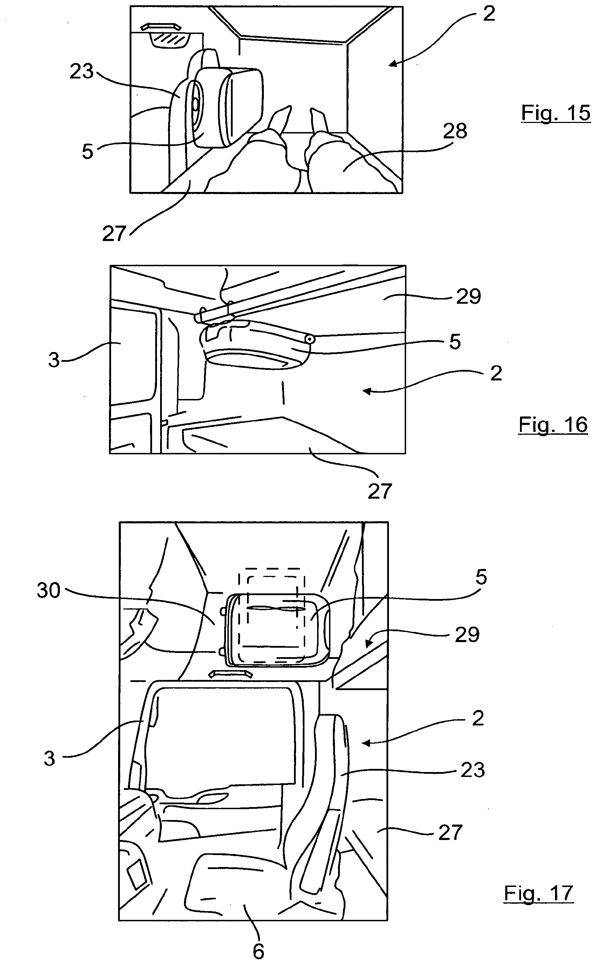

In Fig. 15 ist die Anordnung nach Fig. 12 gezeigt mit dem Koffer 5 an der Rückseite der Rückenlehne 23, wobei sich daran eine rückwärtige untere Liege 27 anschließt. Mit den dargestellten Beinen 28 einer Person wird verdeutlicht, dass die Beinfreiheit auf der Liege 27 durch den Koffer 5 nur unwesentlich eingeschränkt ist, insbesondere dann wenn der Beifahrersitz 6 mit seiner Rückenlehne 23 insgesamt nach vorne verstellt wird und/oder die Rückenlehne 23 nach vorne geklappt wird.

In Fig. 16 ist weiter ein geeigneter Anbringungsort für den Koffer 5 an der Unterseite einer oberen Liege dargestellt, wobei auch dort ein entsprechendes Tragschienenteil anzuordnen ist oder gegebenenfalls eine Einhängevorrichtung mit Haken ausgebildet sein kann.

In Fig. 17 ist eine weitere alternative oder zusätzliche Möglichkeit für die Verstauung des Koffers 5 an einer inneren Dachseitenwand 30 oberhalb der Kabinentür 3 gezeigt, wobei auch hier ein entsprechendes Tragschienenteil anzubringen ist. Der Koffer 5 kann dabei quer oder gegebenenfalls hochkant (strichliert eingezeichnet) gehalten und verstaut werden.

### Bezugszeichenliste

- 1: Lastkraftwagen
- 2: Fahrerkabine
- 3: Kabinentür
- 4: Person
- 5: Koffer
- 6: Beifahrersitz
- 7: Arm
- 8: Einhängevorrichtung (1. Ausführungsform)
- 9: Tragschienenteil
- 10: Einhängehaken
- 11: Türbrüstung
- 12: Schienenaufnahmeteil
- 13: Einhängevorrichtung (2. Ausführungsform)
- 14: Einhängevorrichtung (3. Ausführungsform)
- 15: Einhängehaken
- 16: Doppelpfeil
- 17: Einhängevorrichtung (4. Ausführungsform)
- 18: Ausziehgriff
- 19: Doppelpfeil
- 20: Griffteil
- 21: Einhängehaken
- 22: oberer Türrahmen
- 23: Rückenlehne
- 24: Tragschienenteil
- 25: Druckknopf-Arretierung
- 26: Deckelklappe
- 27: untere Liege
- 28: Beine
- 29: obere Liege
- 30: innere Dachseitenwand

## Patentansprüche

1. Nutzfahrzeugkabine mit einem mobilen Stauraum, wobei der mobile Stauraum durch wenigstens ein Transportbehältnis (5) gebildet ist, **dadurch gekennzeichnet,**
**dass** das Transportbehältnis (5) mit einer Befestigungseinrichtung (8; 13; 14; 17) an einer Türinnenseite einer Kabinentür (3) lösbar festlegbar ist,
**dass** das Transportbehältnis (5) so dimensioniert und die Befestigungseinrichtung (8; 13; 14; 17) so ausgebildet und angeordnet ist, dass das an der Kabinentür (3) festgelegte Transportbehältnis (5) bei geschlossener Kabinentür (3) über einer Sitzfläche in die Kabine (2) eingeschwenkt ist, und
**dass** die Befestigungseinrichtung (8; 13; 14; 17) mehrteilig lösbar als Auf- und/oder Einhängevorrichtung ausgebildet ist und ein Einhängeteil (12; 15; 21) am Transportbehältnis (5) sowie ein Tragteil (9; 11; 22) an der Kabinentür (3) aufweist.

2. Nutzfahrzeugkabine nach Anspruch 1, **dadurch gekennzeichnet, dass** das Transportbehältnis ein Koffer (5) oder eine Tasche ist.

3. Nutzfahrzeugkabine nach Anspruch 1 oder 2, **dadurch gekennzeichnet,**
**dass** die Abmaße des Transportbehältnisses (5) etwa den Abmaßen von Flugzeugfreigepäck (Handgepäck) entsprechen, und/oder
**dass** das Transportbehältnis (5) für ein dem Flugzeugfreigepäck (Handgepäck) entsprechendes Gesamtgewicht ausgelegt ist.

4. Nutzfahrzeugkabine nach einem der vorhergehenden Ansprüche, **dadurch gekennzeichnet, dass** das Einhängeteil am Transportbehältnis (5) ein Einhängeelement ist und das zugeordnete Tragteil an der Kabinentür (3) durch die innere Türbrüstung (11) gebildet ist.

5. Nutzfahrzeugkabine nach Anspruch 4, **dadurch gekennzeichnet, dass** das Einhängeelement in das Transportbehältnis (5) einklappbar und/oder versenkbar ausgebildet ist.

6. Nutzfahrzeugkabine nach einem der vorhergehenden Ansprüche, **dadurch gekennzeichnet,**
**dass** das Tragteil an der Kabinentür (3) ein Tragschienenteil (9) ist, das an der Kabinentür (3) in Höhe der Türbrüstung (11) angebracht oder anbringbar ist, und
**dass** das Einhängeteil am Transportbehältnis (5) ein zugeordnetes Schienenaufnahmeteil (12) ist, mit dem das Transportbehältnis (5) auf das Tragschienenteil (9) aufsteckbar ist.

7. Nutzfahrzeugkabine nach einem der vorhergehenden Ansprüche, **dadurch gekennzeichnet,**
**dass** das Transportbehältnis einen Ausziehgriff (18) aufweist und das Einhängeteil am Ausziehgriff (18) angebracht ist, und das zugeordnete Tragteil an der Kabinentür (3) ausgebildet ist.

8. Nutzfahrzeugkabine nach Anspruch 7, **dadurch gekennzeichnet,**
**dass** das als Koffer (5) ausgebildete Transportbehältnis einen Ausziehgriff (18) aufweist und das Einhängeteil am Griffteil (20) des Ausziehgriffs (18) angebracht ist, und das zugeordnete Tragteil am oberen Türrahmen (20) der Kabinentür (3) ausgebildet ist, insbesondere dergestalt, dass der Koffer (5) an der offenen Kabinentür (3) mit ausgefahrenem Ausziehgriff (18) am oberen Türrahmen (20) eingehängt wird und dann nach oben so weit bis zu einer definierten Position angehoben und dabei der Ausziehgriff (18) bis zu einer gegebenenfalls durch eine Raste bestimmten Position eingeschoben wird, dass der Koffer (5) in der Höhe über der Sitzfläche (6) positioniert ist.

9. Nutzfahrzeugkabine nach einem der vorhergehenden Ansprüche, **dadurch gekennzeichnet, dass** wenigstens ein weiteres Tragteil an der Rückseite einer nach vorne klappbaren Sitz-Rückenlehne angeordnet ist.

10. Nutzfahrzeugkabine nach einem der vorhergehenden Ansprüche, **dadurch gekennzeichnet, dass** wenigstens ein weiteres Tragteil an der Unterseite einer oberen Liege (29) angeordnet ist.

11. Nutzfahrzeugkabine nach einem der vorhergehenden Ansprüche, **dadurch gekennzeichnet, dass** wenigstens ein weiteres Tragteil an einer Dachseitenwand (30) oberhalb der Kabinentür (3) angeordnet ist.

12. Nutzfahrzeugkabine nach einem der Ansprüche 6 bis 11, **dadurch gekennzeichnet, dass** das als Tragschienenteil ausgebildete Tragteil eine federvorgespannte Arretierung aufweist.

13. Fahrzeug, insbesondere Nutzfahrzeug, mit einer Nutzfahrzeugkabine nach einem der vorhergehenden Ansprüche.

## Claims

1. Commercial vehicle cab with a mobile storage compartment, wherein the mobile storage compartment is formed by at least one transport container (5), **characterized in that** the transport container (5) can be releasably secured to an inner side of a cab door (3) with a fastening device (8; 13; 14; 17), **in that** the transport container (5) is dimensioned in such a manner and the fastening device (8; 13; 14; 17) is designed and arranged in such a manner that, when the cab door (3) is closed, the transport container (5) secured to the cab door (3) is pivoted over a seat surface into the cab (2), and **in that** the fastening device (8; 13; 14; 17) is of multi-part and releasable design in the form of a hook-on and/or hook-in device and has a hook-on part (12; 15; 21) on the transport container (5) and a supporting part (9; 11; 22) on the cab door (3).

2. Commercial vehicle cab according to Claim 1, **characterized in that** the transport container is a case (5) or a bag.

3. Commercial vehicle cab according to Claim 1 or 2, **characterized in that** the dimensions of the transport container (5) approximately correspond to the dimensions of an aircraft luggage allowance (hand luggage), and/or **in that** the transport container (5) is designed for an overall weight corresponding to the aircraft luggage allowance (hand luggage).

4. Commercial vehicle cab according to one of the preceding claims, **characterized in that** the hook-in part on the transport container (5) is a hook-in element, and the associated supporting part on the cab door (3) is formed by the inner door ledge (11).

5. Commercial vehicle cab according to Claim 4, **characterized in that** the hook-in element is designed so as to be foldable and/or retractable into the transport container (5).

6. Commercial vehicle cab according to one of the preceding claims, **characterized in that** the supporting part on the cab door (3) is a supporting rail part (9) which is attached or is attachable to the cab door (3) level with the door ledge (11), and **in that** the hook-in part on the transport container (5) is an associated rail-receiving part (12) with which the transport container (5) is pluggable onto the supporting rail part (9).

7. Commercial vehicle cab according to one of the preceding claims, **characterized in that** the transport container has a pull-out handle (18) and the hook-in part is attached to the pull-out handle (18), and the associated supporting part is formed on the cab door (3).

8. Commercial vehicle cab according to Claim 7, **characterized in that** the transport container which is designed as a case (5) has a pull-out handle (18) and the hook-in part is attached to the handle part (20) of the pull-out handle (18), and the associated supporting part is formed on the upper door frame (20) of the cab door (3), in particular in such a manner that the case (5) is hooked on the open cab door (3) with an extended pull-out handle (18) on the upper door frame (20) and is then raised upwards as far as a defined position, and, in the process, the pull-out handle (18) is pushed in as far as a position optionally determined by means of a catch, that the case (5) is positioned in height above the seat surface (6).

9. Commercial vehicle cab according to one of the preceding claims, **characterized in that** at least one further supporting part is arranged on the rear side of a seat backrest which can be folded forward.

10. Commercial vehicle cab according to one of the preceding claims, **characterized in that** at least one further supporting part is arranged on the lower side of an upper bunk (29).

11. Commercial vehicle cab according to one of the preceding claims, **characterized in that** at least one further supporting part is arranged on a roof side wall (30) above the cab door (3).

12. Commercial vehicle cab according to one of Claims 6 to 11, **characterized in that** the supporting part which is designed as a supporting rail part has a spring-prestressed locking means.

13. Vehicle, in particular commercial vehicle, with a commercial vehicle cab according to one of the preceding claims.

## Revendications

1. Cabine de véhicule utilitaire dotée d'un espace de rangement mobile, dans laquelle l'espace de rangement mobile est formé par au moins un récipient de transport (5), **caractérisée en ce que**
le récipient de transport (5) peut être fixé de façon séparable à un côté intérieur de porte d'une porte de cabine (3) au moyen d'un dispositif de fixation (8; 13; 14; 17),
le récipient de transport (5) est dimensionné et le dispositif de fixation (8; 13; 14; 17) est configuré et disposé de telle manière que le récipient de transport (5) attaché à la porte de cabine (3) soit basculé au-dessus d'une face de siège dans la cabine (2) lorsque la porte de cabine (3) est fermée, et
le dispositif de fixation (8; 13; 14; 17) est réalisé en plusieurs parties de façon séparable sous forme de dispositif d'accrochage et/ou de suspension et présente une pièce d'accrochage (12; 15; 21) sur le récipient de transport (5) ainsi qu'une pièce de support (9; 11; 22) sur la porte de cabine (3).

2. Cabine de véhicule utilitaire selon la revendication 1, **caractérisée en ce que** le récipient de transport est un coffre (5) ou une sacoche.

3. Cabine de véhicule utilitaire selon la revendication 1 ou 2, **caractérisée en ce que**
les dimensions du récipient de transport (5) correspondent sensiblement aux dimensions de compartiments à bagages libres des avions (bagages à main), et/ou
le récipient de transport (5) est conçu pour un poids total correspondant à un bagage libre pour les avions (bagage à main).

4. Cabine de véhicule utilitaire selon l'une quelconque des revendications précédentes, **caractérisée en ce que** la pièce d'accrochage sur le récipient de transport (5) est un élément d'accrochage et la pièce de support associée sur la porte de cabine (3) est formée par l'allège intérieure de porte (11).

5. Cabine de véhicule utilitaire selon la revendication 4, **caractérisée en ce que** l'élément d'accrochage peut être rabattu et/ou enfoncé dans le récipient de transport (5).

6. Cabine de véhicule utilitaire selon l'une quelconque des revendications précédentes, **caractérisée en ce que**
la pièce de support sur la porte de cabine (3) est une partie de rail de support (9), qui est ou peut être posée sur la porte de cabine (3) à hauteur de l'allège de porte (11), et
la pièce d'accrochage sur le récipient de transport (5) est une partie de logement de rail associée (12), avec laquelle le récipient de transport (5) peut être engagé sur la partie de rail de support (9).

7. Cabine de véhicule utilitaire selon l'une quelconque des revendications précédentes, **caractérisée en ce que** le récipient de transport présente une poignée d'extraction (18) et la pièce d'accrochage est posée sur la poignée d'extraction (18), et la pièce de support associée est formée sur la porte de cabine (3).

8. Cabine de véhicule utilitaire selon la revendication 7, **caractérisée en ce que** le récipient de transport réalisé en forme de coffre (5) présente une poignée d'extraction (18) et la pièce d'accrochage est posée sur la partie de prise (20) de la poignée d'extraction (18), et la pièce de support associée est formée sur le cadre de porte supérieur (20) de la porte de cabine (3), en particulier de telle manière que le coffre (5) soit accroché au cadre de porte supérieur (20) avec la poignée d'extraction sortie (18) lorsque la porte de cabine (3) est ouverte et soit alors soulevé vers le haut jusqu'à une position définie et que la poignée d'extraction (18) soit en l'occurrence rentrée jusqu'à une position définie éventuellement par un cran, et que le coffre (5) soit positionné en hauteur au-dessus de la face de siège (6).

9. Cabine de véhicule utilitaire selon l'une quelconque des revendications précédentes, **caractérisée en ce qu'**au moins une autre pièce de support est disposée sur le côté arrière d'un dossier de siège rabattable vers l'avant.

10. Cabine de véhicule utilitaire selon l'une quelconque des revendications précédentes, **caractérisée en ce qu'**au moins une autre pièce de support est disposée sur le côté inférieur d'une couchette supérieure (29).

11. Cabine de véhicule utilitaire selon l'une quelconque des revendications précédentes, **caractérisée en ce qu'**au moins une autre pièce de support est disposée sur une paroi latérale du toit (30) au-dessus de la porte de cabine (3).

12. Cabine de véhicule utilitaire selon l'une quelconque des revendications 6 à 11, **caractérisée en ce que** la pièce de support réalisée en forme de partie de rail de support présente un arrêt précontraint par ressort.

13. Véhicule, en particulier véhicule utilitaire, avec une cabine de véhicule utilitaire selon l'une quelconque des revendications précédentes.
